(19) Europäisches Patentamt
European Patent Office
Office européen des brevets

(11) **EP 3 657 664 B1**

(12) **FASCICULE DE BREVET EUROPEEN**

(45) Date de publication et mention
de la délivrance du brevet:
**02.06.2021 Bulletin 2021/22**

(51) Int Cl.:
*H02M 7/5395* ^(2006.01)    *H02M 7/5387* ^(2007.01)
*H02M 1/00* ^(2006.01)

(21) Numéro de dépôt: **19208730.2**

(22) Date de dépôt: **12.11.2019**

(54) **PROCEDE DE COMMANDE D'UNE MACHINE ELECTRIQUE TRIPHASEE**

STEUERUNGSVERFAHREN EINER DREIPHASIGEN ELEKTRISCHEN MASCHINE

METHOD FOR CONTROLLING A THREE-PHASE ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2018 FR 1871793**

(43) Date de publication de la demande:
**27.05.2020 Bulletin 2020/22**

(73) Titulaire: **Valeo Siemens eAutomotive France SAS 95800 Cergy (FR)**

(72) Inventeur: **CHAUVENET, Pierre-Alexandre 21420 Savigny-lès-Beaune (FR)**

(74) Mandataire: **Argyma 14 Boulevard de Strasbourg 31000 Toulouse (FR)**

(56) Documents cités:
- **DAVOOD YAZDANI ET AL: "Multifunctional Grid-Connected Multimodule Power Converters Capable of Operating in Single-Pulse and PWM Switching Modes", IEEE TRANSACTIONS ON POWER ELECTRONICS, INSTITUTE OF ELECTRICAL AND ELECTRONICS ENGINEERS, USA, vol. 23, no. 3, 1 mai 2008 (2008-05-01), pages 1228-1238, XP011207415, ISSN: 0885-8993**

**Description**

DOMAINE TECHNIQUE ET OBJET DE L'INVENTION

La présente invention concerne la commande des machines électriques triphasées et plus particulièrement un système et procédé de commande d'une machine électrique triphasée à partir d'un onduleur, notamment pour véhicule automobile.

L'invention vise notamment à fournir une solution efficace de contrôle d'un onduleur par commutation dynamique de sa fréquence et permettant notamment d'élargir la plage de vitesse de rotation du rotor de la machine électrique.

ETAT DE LA TECHNIQUE

Comme cela est connu, un véhicule automobile électrique ou hybride comprend un système de motorisation électrique alimenté par une batterie d'alimentation haute tension via un réseau électrique embarqué haute tension et une pluralité d'équipements électriques auxiliaires alimentés par une batterie d'alimentation basse tension via un réseau électrique embarqué basse tension. La batterie d'alimentation haute tension assure une fonction d'alimentation en énergie du système de motorisation électrique permettant la propulsion du véhicule. Plus précisément, afin de commander la machine électrique entrainant les roues du véhicule, il est connu d'utiliser un onduleur permettant de convertir la tension continue fournie par la batterie d'alimentation haute tension en une ou plusieurs tensions de commande alternatives, par exemple sinusoïdales.

De manière connue, l'onduleur comprend des composants électroniques de puissance, par lesquels passe l'énergie alimentant la machine électrique, et une unité électronique de contrôle, permettant de contrôler lesdits composants électroniques de puissance. Ces composants électroniques de puissance comportent notamment les interrupteurs qui sont commandés en ouverture et en fermeture par des signaux à Modulation en Largeur d'Impulsion ou PWM (pour « Pulse Width Modulation » en anglais) générés par l'unité électronique de contrôle.

Dans le cas d'une machine électrique triphasée, l'onduleur génère, à partir de la tension délivrée par la batterie haute tension, trois tensions de commande des trois phases de la machine électrique, déphasés deux à deux, par exemple de 120°. A cette fin, l'onduleur comprend trois branches comprenant chacun un interrupteur haut et un interrupteur bas, la position d'un interrupteur haut d'une branche étant toujours l'inverse de la position de l'interrupteur bas de cette même branche. Chaque interrupteur haut d'une branche pouvant être dans une position 0 ou 1, il existe au total huit ($2^3$) combinaisons possibles de configurations des interrupteurs de l'onduleur.

Dans sa stratégie la plus simple, la commutation des interrupteurs est réalisée à une fréquence fixe résultant de la comparaison d'une porteuse et d'une modulante, le plus souvent sinusoïdale « avec injection d'harmonique 3 ». Une telle stratégie dite « MLI intersective » présente toutefois les inconvénients notables de ne pas fournir la tension maximale possible à chacune des phases de la machine électrique, de générer des pertes importantes par commutation et de limiter la plage de vitesse de rotation du rotor de la machine électrique puisque la fréquence de la modulante est nécessairement inférieure à la fréquence de la porteuse. Aussi, il est connu d'utiliser l'équivalent numérique de la MLI intersective connu sous le nom de modulation en vecteur d'espace ou SVM pour (Space Vector Modulation (SVM) en anglais). De manière connue, chaque configuration, qui représente la position simultanée des interrupteurs de l'onduleur, peut être matérialisée par un vecteur, désigné « vecteur de contrôle », dans un plan complexe connu sous le nom de « $\alpha\beta$ » par l'homme du métier, qui donne une représentation en deux dimensions des huit vecteurs V0, V1, V2, V3, V4, V5, V6, V7. Les vecteurs V1, V2, V3, V4, V5 et V6, désignés « vecteurs actifs » délimitent six secteurs de commande dans le plan complexe (représentation hexagonale), chaque secteur correspondant à la portion s'étendant entre deux vecteurs adjacents. Le vecteur V0, qui correspond aux positions « 0 » des trois interrupteurs hauts, est désigné « premier vecteur de séquence zéro » et le vecteur V7, qui correspond aux positions « 1 » des trois interrupteurs hauts, est désigné « deuxième vecteur de séquence zéro ». La commande de consigne de la machine électrique peut être matérialisée dans cette représentation par un vecteur dit « de référence », désigné ci-après vecteur de commande, se déplaçant de secteur en secteur avec la rotation du rotor de la machine électrique. Le vecteur de commande est exprimé en deux composantes des vecteurs du secteur dans lequel il se trouve et de l'un des vecteurs de séquence zéro. Autrement dit, le vecteur de commande est exprimé sous la forme d'une combinaison de trois vecteurs. Il en résulte que pour chaque secteur, la génération des tensions de phase sera réalisée par la commutation entre trois configurations des interrupteurs et répétée à une fréquence fixe. Bien qu'elle puisse présenter des avantages par rapport à la MLI intersective en jouant par exemple sur le choix des secteurs, le fait de réaliser une séquence à fréquence fixe apporte les mêmes inconvénients que la MLI intersective.

Afin de remédier à ces inconvénients, il est connu d'utiliser une modulation SVM pleine onde, encore appelée « Full Wave » ou « 180° » ou « Six Step ». Dans une solution utilisant de type de modulation, chaque secteur est centré sur un vecteur actif qui est utilisé pour définir la configuration des interrupteurs lorsque le vecteur de commande se trouve dans son secteur. Autrement dit, le vecteur de commande est exprimé par rapport au seul vecteur actif du secteur dans lequel il se trouve. Dans ce cas, la fréquence de commutation est variable et dépend de la vitesse de rotation du rotor de la machine électrique. Il en résulte que la fréquence de commutation des interrupteurs, et donc les pertes par commutation, diminue significativement. Une telle stratégie permet de plus de fournir, par rapport à une stratégie de commutation à fréquence fixe, une tension plus importante à chacune des phases de la machine électrique, de générer moins de pertes par commutation et d'augmenter la plage de vitesse de rotation du rotor de la machine électrique.

Un inconvénient de cette stratégie est que l'amplitude de la tension appliquée aux phases de la machine électrique ne peut pas être contrôlée, sauf en contrôlant la tension continue d'entrée de l'onduleur, ce qui peut s'avérer trop complexe ou onéreux à réaliser. Or, le contrôle de l'amplitude de la tension appliquée aux phases de la machine électrique est nécessaire pour effectuer le contrôle du couple, fourni par la machine électrique, sur une plage importante.

Il existe donc le besoin d'une solution simple, fiable et efficace permettant de mesurer ces variations.

Le document DAVOOD YAZDANI ET AL: "Multifunctional Grid-Connected Multimodule Power Converters Capable of Operating in Single-Pulse and PWM Switching Modes" fait partie de l'état de l'art de la présente demande.

## PRESENTATION GENERALE DE L'INVENTION

A cet effet, l'invention a tout d'abord pour objet un procédé de commande d'une machine électrique triphasée à partir d'un onduleur, ledit onduleur recevant en entrée une tension continue et délivrant en sortie trois tensions de phase permettant de commander la machine électrique, l'onduleur comprenant trois branches comprenant chacune un interrupteur haut et un interrupteur bas, chaque interrupteur étant apte à commuter dans une position ouverte ou une position fermée, la position d'un interrupteur haut d'une branche étant toujours l'inverse de la position de l'interrupteur bas de cette même branche, la position simultanée des interrupteurs des branches de l'onduleur étant matérialisée par un vecteur de contrôle comportant trois éléments binaires, soit huit vecteurs représentant les différentes combinaisons des positions possibles des interrupteurs, le vecteur pour lequel tous les interrupteurs haut des branches sont en position ouverte étant un premier vecteur dit de séquence zéro et le vecteur pour lequel tous les interrupteurs haut des branches sont en position fermée étant un deuxième vecteur dit de séquence zéro, et les autres vecteurs étant dits « vecteurs actifs », lesdits vecteurs actifs délimitant six secteurs de commande en représentation complexe où chaque secteur comporte en son centre un vecteur actif, la commande de consigne de la machine électrique étant représentée par un vecteur de commande se déplaçant de secteur en secteur avec la rotation du rotor de la machine électrique, le procédé étant caractérisé en ce que, chaque secteur étant subdivisé en trois sous-secteurs dont un sous-secteur central centré sur le vecteur actif, un premier sous-secteur latéral associé au premier vecteur de séquence zéro, et un deuxième sous-secteur latéral, opposé au premier sous-secteur latéral par rapport au sous-secteur central, associé au deuxième vecteur de séquence zéro, il comprend une étape de commande de la tension aux bornes de chaque phase de la machine électrique, mesurée par rapport au neutre, avec la valeur définie par le vecteur de contrôle associé au sous-secteur dans lequel se trouve le vecteur de commande.

Dans un premier mode de réalisation, le premier sous-secteur latéral précède le sous-secteur central et le deuxième sous-secteur latéral succède au sous-secteur central dans chaque secteur correspondant au premier, au troisième et au cinquième vecteur de contrôle.

Dans un second mode de réalisation, le premier sous-secteur latéral précède le sous-secteur central et le deuxième sous-secteur latéral succède au sous-secteur central dans chaque secteur correspondant au deuxième, au quatrième et au sixième vecteur de contrôle.

Selon un aspect de l'invention, l'angle du secteur d'angle correspondant au sous-secteur central de chaque secteur est défini en radians selon la formule :

[Math. 1]

$$\theta_{VX} = \frac{\left|\overrightarrow{V_{\alpha\beta\,norm}}\right|}{\sqrt{\frac{3}{2}} \times \frac{2}{\pi}} \times \frac{\pi}{3}$$

où

[Math. 2]

$$\left|\overrightarrow{V_{\alpha\beta\,norm}}\right|$$

représente la norme du vecteur de commande (V*) normalisé.

De préférence, l'angle du secteur d'angle correspondant au sous-secteur central de chaque secteur est compris entre 0 et

[Math. 3]

$$\frac{\pi}{3}\text{ radians.}$$

Selon un aspect de l'invention, le procédé est une modulation en vecteur d'espace pleine onde.

L'invention concerne également un onduleur de commande d'une machine électrique triphasée, ledit onduleur étant apte à convertir une tension continue en trois tensions de phase permettant de commander la machine électrique, l'onduleur comprenant trois branches comprenant chacune un interrupteur haut et un interrupteur bas, chaque interrupteur étant apte à commuter dans une position ouverte ou une position fermée, la position d'un interrupteur haut d'une branche étant toujours l'inverse de la position de l'interrupteur bas de cette même branche, la position simultanée des interrupteurs des branches de l'onduleur étant matérialisée par un vecteur de contrôle comportant trois éléments binaires, soit huit vecteurs représentant les différentes combinaisons des positions possibles des interrupteurs, le vecteur pour lequel tous les interrupteurs haut des branches sont en position ouverte étant un premier vecteur dit de séquence zéro et le vecteur pour lequel tous les interrupteurs haut des branches sont en position fermée étant un deuxième vecteur dit de séquence zéro, et les autres vecteurs étant dits « vecteurs actifs », lesdits vecteurs actifs délimitant six secteurs de commande en représentation complexe où chaque secteur comporte en son centre un vecteur actif, la commande de consigne de la machine électrique étant représentée par un vecteur de commande se déplaçant de secteur en secteur avec la rotation du rotor de la machine électrique, l'onduleur étant caractérisé en ce que, chaque secteur étant subdivisé en trois sous-secteurs dont un sous-secteur central centré sur le vecteur actif, un premier sous-secteur latéral associé au premier vecteur de séquence zéro, et un deuxième sous-secteur latéral, opposé au premier sous-secteur latéral par rapport au sous-secteur central, associé au deuxième vecteur de séquence zéro, il est configuré pour appliquer une tension aux bornes de chaque phase de la machine électrique, mesurée par rapport au neutre, égale à la valeur définie par le vecteur de contrôle associé au sous-secteur dans lequel se trouve le vecteur de commande.

Dans une première forme de réalisation, le premier sous-secteur latéral précède le sous-secteur central et le deuxième sous-secteur latéral succède au sous-secteur central dans chaque secteur correspondant au premier, au troisième et au cinquième vecteur de contrôle.

Dans une seconde forme de réalisation, le premier sous-secteur latéral précède le sous-secteur central et le deuxième sous-secteur latéral succède au sous-secteur central dans chaque secteur correspondant au deuxième, au quatrième et au sixième vecteur de contrôle.

Selon un aspect de l'invention, l'angle du secteur d'angle correspondant au sous-secteur central de chaque secteur est défini en radians selon la formule :

[Math. 4]

$$\theta_{VX} = \frac{\left|\overrightarrow{V_{\alpha\beta\,norm}}\right|}{\sqrt{\frac{3}{2}} \times \frac{2}{\pi}} \times \frac{\pi}{3}$$

où

[Math. 5]

$$\left|\overrightarrow{V_{\alpha\beta\,norm}}\right|$$

représente la norme du vecteur de commande (V*) normalisé.

De préférence, l'angle du secteur d'angle correspondant au sous-secteur central de chaque secteur est compris entre 0 et

[Math. 6]

$$\frac{\pi}{3} \text{ radians.}$$

L'invention concerne également un système de motorisation électrique pour véhicule automobile, ledit système comprenant une machine électrique triphasée et un onduleur, tel que présenté précédemment, apte à générer des tensions de phase de ladite machine électrique à partir d'une tension continue.

Selon une caractéristique de l'invention, le système comprend une batterie d'alimentation haute tension connectée à l'onduleur via une interface définissant une tension continue.

L'invention concerne aussi un véhicule électrique ou hybride comprenant système de motorisation électrique tel que présenté précédemment.

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

[Fig. 1] (déjà commentée) illustre une représentation des vecteurs de contrôle et des secteurs dans la modulation de vecteur d'espace de l'art antérieur ;

[Fig. 2] illustre schématiquement une forme de réalisation d'un onduleur selon l'invention ;

[Fig. 3] illustre une représentation des vecteurs de contrôle et des secteurs dans la modulation de vecteur d'espace selon l'invention ;

[Fig. 4] illustre schématiquement une représentation linéaire détaillée de deux secteurs adjacents et de leurs sous-secteurs ;

[Fig. 5A] est un exemple de signal appliqué aux bornes de l'interrupteur bas I2 de la première branche de l'onduleur de la figure 2 avec une stratégie de type Full-Wave de l'art antérieur ;

[Fig. 5B] est un exemple de signal de tension différentiel normalisé entre la phase U et la phase V lors d'une commande des interrupteurs comprenant la commande de l'interrupteur bas I2 de la première branche de l'onduleur de la figure 2 par le signal de la figure 5A avec une stratégie de type Full-Wave de l'art antérieur ;

[Fig. 5C] est un exemple de signal de tension aux bornes de la phase U lors d'une commande des interrupteurs comprenant la commande de l'interrupteur bas I2 de la première branche de l'onduleur de la figure 2 par le signal de la figure 5A avec une stratégie de type Full-Wave de l'art antérieur ;

[Fig. 6A] est un exemple de signal appliqué aux bornes de l'interrupteur bas I2 de la première branche de l'onduleur de la figure 2 avec la stratégie selon l'invention ;

[Fig. 6B] est un exemple de signal de tension différentiel normalisé entre la phase U et la phase V lors d'une commande des interrupteurs comprenant la commande de l'interrupteur bas I2 de la première branche de l'onduleur de la figure 2 par le signal de la figure 6A avec la stratégie selon l'invention ;

[Fig. 6C] est un exemple de signal de tension aux bornes de la phase U lors d'une commande des interrupteurs comprenant la commande de l'interrupteur bas I2 de la première branche de l'onduleur de la figure 2 par le signal de la figure 6A avec la stratégie selon l'invention.

Il faut noter que les figures exposent l'invention de manière détaillée pour mettre en œuvre l'invention, lesdites figures pouvant bien entendu servir à mieux définir l'invention le cas échéant.

## DESCRIPTION DETAILLEE DE L'INVENTION

Dans la description qui sera faite ci-après, l'invention sera décrite dans son application à un véhicule automobile électrique ou hybride sans que cela ne soit limitatif de la portée de la présente invention.

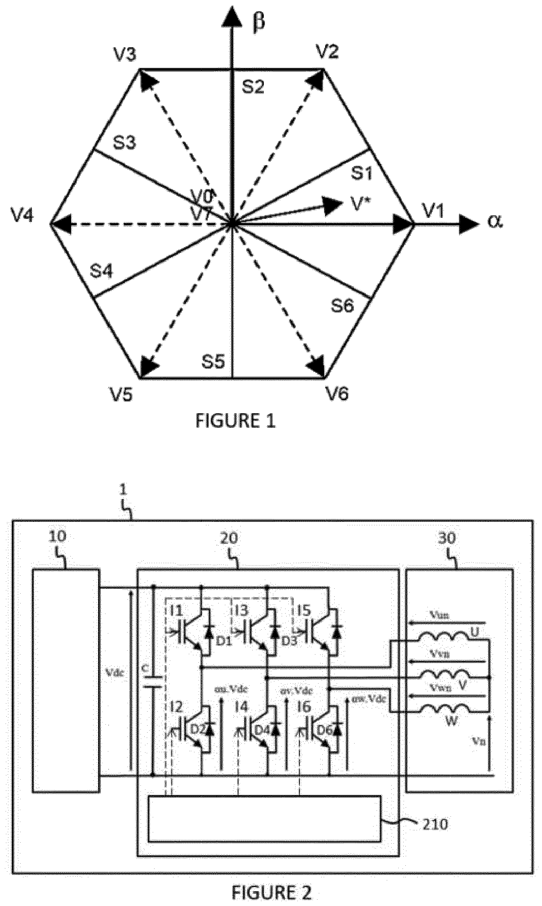

On a représenté à la figure 2 un exemple de schéma électrique d'un système de motorisation électrique pour véhicule automobile. Ce système de motorisation électrique comprend une batterie d'alimentation haute tension 10, un onduleur 20 et une machine électrique 30.

La batterie d'alimentation haute tension 10 est connectée à l'onduleur 20 afin d'assurer une fonction d'alimentation en énergie de la machine électrique 30, pour en faire tourner le rotor, ou une fonction de collecte d'énergie provenant de la machine électrique, par exemple lors d'un freinage du véhicule. La batterie d'alimentation haute tension 10 délivre typiquement une tension comprise entre 100 V et 900 V, de préférence entre 100 V et 500 V. La recharge en énergie électrique de la batterie d'alimentation haute tension 10 peut être réalisée par ailleurs en la connectant à un réseau électrique externe, par exemple le réseau électrique alternatif domestique.

La machine électrique 30 est une machine électrique tournante, de préférence destinée à entrainer les roues du véhicule à partir de l'énergie fournie par la batterie d'alimentation haute-tension 10. Plus précisément, la machine électrique 30 est une machine électrique à courant alternatif alimentée par une source de courants polyphasés. Par exemple, la machine électrique 30 peut être un moteur à courant alternatif. Dans l'exemple préféré décrit ci-après, la machine électrique 30 est alimentée par une source de courants triphasés sans que cela ne soit limitatif de la portée de la présente invention.

Dans cet exemple, la commande de la machine électrique 30 est réalisée au moyen de l'onduleur. A cette fin, l'onduleur 20 est configuré pour convertir le courant continu fourni par la batterie d'alimentation haute tension 10 en trois courants de commande alternatifs, par exemple sinusoïdaux. Autrement dit, l'onduleur 20 a pour fonction de transformer le courant continu délivré en entrée par la batterie d'alimentation haute tension 10 en trois courants de phase permettant de commander la machine électrique 30. A l'inverse, dans un autre mode de fonctionnement, la machine électrique 30 peut également fournir trois courants alternatifs à l'onduleur 20 afin que ledit onduleur 20 les transforme en un courant continu permettant de charger la batterie d'alimentation haute-tension 10.

L'onduleur 20 comprend une unité électronique de contrôle 210 et des composants électroniques de puissance par lesquels passe l'énergie alimentant la machine électrique.

Ces composants permettent de transformer le tension continue fournie par la batterie d'alimentation haute tension 10 en tensions de phase alternatives d'alimentation de la machine électrique 30. Ces composants comprennent notamment des interrupteurs I1, I2, I3, I4, I5, I6 électroniques, se présentant par exemple sous la forme de transistors semi-conducteurs, agencés en circuit électrique pour permettre un passage commandé d'énergie électrique de et vers la machine électrique 30.

L'unité électronique de contrôle 210 est apte à contrôler les interrupteurs I1, I2, I3, I4, I5, I6 afin notamment que lesdits interrupteurs I1, I2, I3, I4, I5, I6 réalisent la fonction de conversion du tension continue reçue de la batterie d'alimentation haute tension 10 en trois tensions alternatives de commande des phases U, V, W de la machine électrique 30.

L'onduleur 20 comprend trois branches comprenant chacun un interrupteur haut I1, I3, I5 et un interrupteur bas I2, I4, I6. Chaque interrupteur I1, I2, I3, I4, I5, I6 est apte à commuter dans une position ouverte ou une position fermée, la position d'un interrupteur haut I1, I3, I5 d'une branche étant toujours l'inverse de la position de l'interrupteur bas I2, I4, I6 de cette même branche.

La position simultanée des interrupteurs I1, I2, I3, I4, I5, I6 des branches de l'onduleur 20 est matérialisée par un vecteur de contrôle comportant trois éléments binaires, soit huit vecteurs V0, V1, V2, V3, V4, V5, V6, V7 représentant les différentes combinaisons des positions possibles des interrupteurs I1, I2, I3, I4, I5, I6. Autrement dit, chaque vecteur de contrôle V0, V1, V2, V3, V4, V5, V6, V7 correspond à un état de l'ensemble des positions des interrupteurs I1, I2, I3, I4, I5, I6. Les vecteurs V1, V2, V3, V4, V5 et V6 sont dits « vecteurs actifs » car la tension aux bornes d'au moins une phase de la machine électrique 30 est non nulle lorsque les configurations des interrupteurs I1, I2, I3, I4, I5, I6 associées à ces vecteurs sont mises en œuvre.

Les vecteurs V1, V2, V3, V4, V5 et V6 actifs délimitent six secteurs S1, S2, S3, S4, S5, S6 de commande en représentation complexe où chaque secteur S1, S2, S3, S4, S5, S6 comporte en son centre un vecteur actif, le vecteur V0 étant dit « premier vecteur de séquence zéro » et le vecteur V7 est dit « deuxième vecteur de séquence zéro ».

L'unité électronique de contrôle 210 est configurée pour recevoir (ou générer) une consigne permettant de commander la machine électrique 30 et pour déterminer un vecteur de commande V*, aussi appelé vecteur de référence dans la littérature, représentatif de la consigne reçue. Ce vecteur de commande V* se déplace de secteur S1, S2, S3, S4, S5, S6 en secteur S1, S2, S3, S4, S5, S6 dans un sens antihoraire avec la rotation du rotor de la machine électrique 30 de manière connue en soi.

L'unité électronique de contrôle 210 est configurée pour déterminer dans quel sous-secteur se trouve le vecteur de commande V* à un instant donné et pour appliquer une tension aux bornes de chaque phase U, V, W de la machine électrique 30, mesurée par rapport au neutre, égale à la valeur définie par le vecteur de contrôle V0, V1, V2, V3, V4, V5, V6, V7 associé au sous-secteur dans lequel se trouve le vecteur de commande V*.

A cette fin, l'unité électronique de contrôle 210 est configurée pour commander les interrupteurs I1, I2, I3, I4, I5, I6 de manière à les placer dans la configuration correspondant au vecteur de contrôle V0, V1, V2, V3, V4, V5, V6, V7 associé au sous-secteur dans lequel se trouve le vecteur de commande V*. Une telle commande est réalisée par la génération et l'envoi, par l'unité électronique de contrôle 210, de signaux PWM (Pulse Width Modulation) aux interrupteurs I1, I2, I3, I4, I5, I6. La génération de tels signaux PWM étant connue en soi, elle ne sera pas davantage détaillée ici.

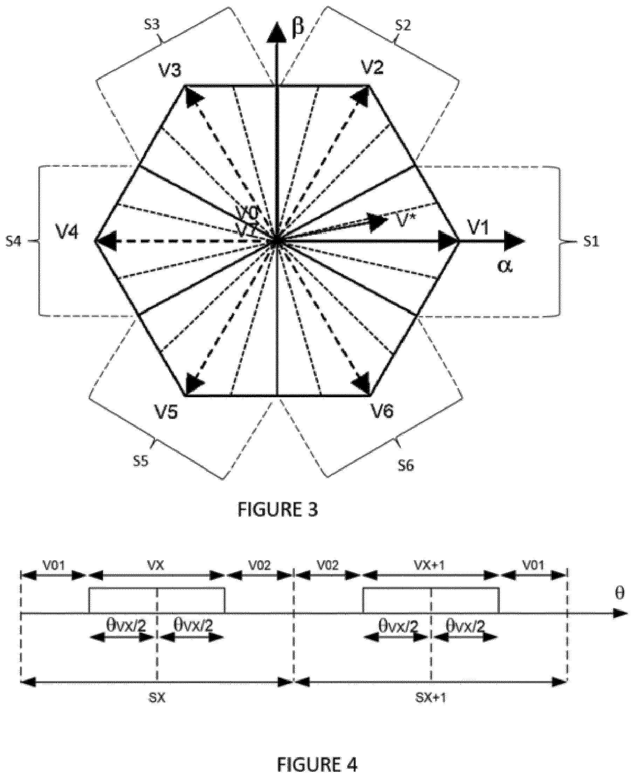

La figure 3 illustre une représentation des vecteurs de contrôle V0, V1, V2, V3, V4, V5, V6, V7, des secteurs S1, S2, S3, S4, S5, S6 et des sous-secteurs dans la modulation de vecteur d'espace selon l'invention. En supposant que les phases U, V, W de la machine électrique 30 sont équilibrées, on a

[Math. 7]

$$v_{UN} + v_{VN} + v_{WN} = 0$$

où

[Math. 8]

$$v_{UN},$$

[Math. 9]

$$v_{VN}$$

et

[Math. 10]

$$v_{WN}$$

représentent les tensions aux bornes de chaque phase U, V, W de la machine électrique 30.

La tension

[Math. 11]

$$v_N$$

au point central des phases U, V, W de la machine électrique 30 est définie par

[Math. 12]

$$v_N = \frac{(\alpha_U + \alpha_V + \alpha_W) \times V_{dc}}{3}$$

où

[Math. 13]

$$\alpha_U, \alpha_V, \alpha_W$$

représentent le coefficient donnant la tension aux bornes des interrupteurs bas I2, I4, I6 des trois branches de l'onduleur 1 lorsque ledit coefficient est multiplié par la tension continue

[Math. 14]

$$V_{dc}$$

d'entrée de l'onduleur 1.

La tension

[Math. 15]

$$v_{Nnorm}$$

normalisée de la tension

[Math. 16]

$$v_N$$

s'écrit donc

[Math. 17]

$$v_{Nnorm} = \frac{v_N}{V_{DC}} = \frac{(\alpha_U + \alpha_V + \alpha_W)}{3}$$

De même, la tension normalisée aux bornes de chaque phase U, V, W de la machine électrique 30 s'écrit

[Math. 18]

$$v_{UNnorm} = \frac{v_{UN}}{V_{DC}},$$

[Math. 19]

$$v_{VNnorm} = \frac{v_{VN}}{V_{DC}}$$

et

[Math. 20]

$$v_{WNnorm} = \frac{v_{WN}}{V_{DC}}$$

On en déduit alors :

[Math. 21]

$$v_{UNnorm} = \alpha_U - v_{Nnorm} = \alpha_U - \frac{(\alpha_U + \alpha_V + \alpha_W)}{3} = \frac{2 \times \alpha_U - \alpha_V - \alpha_W}{3}$$

[Math. 22]

$$v_{VNnorm} = \alpha_V - v_{Nnorm} = \alpha_V - \frac{(\alpha_U + \alpha_V + \alpha_W)}{3} = \frac{-\alpha_U + 2 \times \alpha_V - \alpha_W}{3}$$

[Math. 23]

$$v_{VNnorm} = \alpha_W - v_{Nnorm} = \alpha_W - \frac{(\alpha_U + \alpha_V + \alpha_W)}{3} = \frac{-\alpha_U - \alpha_V + 2 \times \alpha_W}{3}$$

Soit dans le plan complexe αβ le vecteur de commande V*, normalisé, est noté

[Math. 24]

$$\overrightarrow{V_{\alpha\beta\,norm}} = \begin{pmatrix} v_{\alpha\,norm} \\ v_{\beta\,norm} \end{pmatrix} = \sqrt{\frac{2}{3}} \begin{pmatrix} \cos(0) & \cos\left(\frac{2\pi}{3}\right) & \cos\left(\frac{4\pi}{3}\right) \\ \sin(0) & \sin\left(\frac{2\pi}{3}\right) & \sin\left(\frac{4\pi}{3}\right) \end{pmatrix} \cdot \begin{pmatrix} v_{UNnorm} \\ v_{VNnorm} \\ v_{WNnorm} \end{pmatrix}.$$

On choisit ici la transformation de Concordia pour l'exemple mais le raisonnement vaut aussi pour la transformation de Clarke.
Les valeurs de ces différents paramètres peuvent être résumées dans la table 1 ci-après pour chacun des vecteurs de contrôle V0, V1, V2, V3, V4, V5, V6, V7:

[Tableaux 1]

**Table 1**

| | αU | αV | αW | Vun norm | | Vvn norm | | Vwn norm | | Vα norm | | Vβ norm | |
|---|---|---|---|---|---|---|---|---|---|---|---|---|---|
| V0 | 0 | 0 | 0 | 0,0000 | 0 | 0,0000 | 0 | 0,0000 | 0 | 0,0000 | 0 | 0,0000 | 0 |
| V1 | 1 | 0 | 0 | 0,6667 | 2/3 | -0,3333 | -1/3 | -0,3333 | -1/3 | 0,8165 | sqrt(2/3) | 0,0000 | 0 |
| V2 | 1 | 1 | 0 | 0,3333 | 1/3 | 0,3333 | 1/3 | -0,6667 | -2/3 | 0,4082 | 1/sqrt(6) | 0,7071 | sqrt(2)/2 |
| V3 | 0 | 1 | 0 | -0,3333 | -1/3 | 0,6667 | 2/3 | -0,3333 | -1/3 | -0,4082 | -1/sqrt(6) | 0,7071 | sqrt(2)/2 |
| V4 | 0 | 1 | 1 | -0,6667 | -2/3 | 0,3333 | 1/3 | 0,3333 | 1/3 | -0,8165 | -sqrt(2/3) | 0,0000 | 0 |
| V5 | 0 | 0 | 1 | -0,3333 | -1/3 | -0,3333 | -1/3 | 0,6667 | 2/3 | -0,4082 | -1/sqrt(6) | -0,7071 | -sqrt(2)/2 |
| V6 | 1 | 0 | 1 | 0,3333 | 1/3 | -0,6667 | -2/3 | 0,3333 | 1/3 | 0,4082 | 1/sqrt(6) | -0,7071 | -sqrt(2)/2 |
| V7 | 1 | 1 | 1 | 0,0000 | 0 | 0,0000 | 0 | 0,0000 | 0 | 0,0000 | 0 | 0,0000 | 0 |

Chaque secteur S1, S2, S3, S4, S5, S6 est lui-même subdivisé en trois sous-secteurs : un sous-secteur central centré sur le vecteur actif V1, V2, V3, V4, V5, V6 du secteur et associé audit vecteur actif V1, V2, V3, V4, V5, V6, un premier sous-secteur latéral, associé au premier vecteur de séquence zéro V0, et un deuxième sous-secteur latéral, opposé au premier sous-secteur latéral par rapport au sous-secteur central, associé au deuxième vecteur de séquence zéro V7.

La figure 4 illustre un exemple détaillé de subdivision de deux secteurs SX, SX+1 adjacents centrés respectivement sur un vecteur de contrôle VX (X = 1, 2, 3, 4 ou 5) et un vecteur de contrôle VX+1. Chaque secteur S1, S2, S3, S4, S5, S6 est subdivisé en trois sous-secteurs. Le sous-secteur central est centré sur le vecteur de contrôle VX, VX+1 sur un angle

$$[Math.\ 25]$$

$$\theta_{VX}$$

défini en radians selon la formule

$$[Math.\ 26]$$

$$\theta_{VX} = \frac{\left|\overrightarrow{V_{\alpha\beta\,norm}}\right|}{\left|\overrightarrow{V_{\alpha\beta\,norm}}\right|_{\max}} \times \frac{\pi}{3}.$$

Sachant que dans le cas de la commande pleine onde, il est connu que :

$$[Math.\ 27]$$

$$\left|\overrightarrow{V_{\alpha\beta}}\right|_{\max} = \sqrt{\frac{3}{2}} \times \frac{2}{\pi} \times V_{DC}$$

soit

$$[Math.\ 28]$$

$$\left|\overrightarrow{V_{\alpha\beta\,norm}}\right|_{\max} = \sqrt{\frac{3}{2}} \times \frac{2}{\pi}$$

où

$$[Math.\ 29]$$

$$\left|\overrightarrow{V_{\alpha\beta\,norm}}\right|$$

représente la norme du vecteur de commande normalisé et donc :

# EP 3 657 664 B1

[Math. 30]

$$\theta_{VX} = \frac{\left|\overrightarrow{V_{\alpha\beta\,norm}}\right|}{\sqrt{\frac{3}{2}} \times \frac{2}{\pi}} \times \frac{\pi}{3}$$

Selon l'invention, on se limite au cas où

[Math. 31]

$$\theta_{VX} < \frac{\pi}{3},$$

c'est-à-dire

[Math. 32]

$$\frac{\left|\overrightarrow{V_{\alpha\beta\,norm}}\right|}{\sqrt{\frac{3}{2}} \times \frac{2}{\pi}} < 1.$$

Les sous-secteurs latéraux sont d'angle identique et encadrent le sous-secteur central. L'un des sous-secteurs est associé au premier vecteur de séquence zéro V0 tandis que l'autre sous-secteur est associé au deuxième vecteur de séquence zéro V7. De plus, de préférence, deux-sous secteurs latéraux adjacents mais appartenant à deux secteurs différentes sont associés au même vecteur de séquence zéro (soit le premier vecteur de séquence zéro V0, soit le deuxième vecteur de séquence zéro V7).

On a représenté à la Table 2 ci-après les deux séquences VMFW1, VMFW2 possibles d'association des vecteurs de contrôle, comparé à la séquence utilisé avec la stratégie Full-Wave (FW) :

[Tableaux 2]

**Table 2**

|  | S1 | | | S2 | | | S3 | | | S4 | | | S5 | | | S6 | | |
|---|---|---|---|---|---|---|---|---|---|---|---|---|---|---|---|---|---|---|
| FW | V1 | V1 | V1 | V2 | V2 | V2 | V3 | V3 | V3 | V4 | V4 | V4 | V5 | V5 | V5 | V6 | V6 | V6 |
| VMFW1 | V0 | V1 | V7 | V7 | V2 | V0 | V0 | V3 | V7 | V7 | V4 | V0 | V0 | V5 | V7 |  | V6 | V0 |
| VMFW2 | V7 | V1 | V0 | V0 | V2 | V7 | V7 | V3 | V0 | V0 | V4 | V7 | V7 | V5 | V0 | V0 | V6 | V7 |

On constate ainsi que le vecteur de commande V* est associé successivement à un vecteur de séquence zéro V0 ou V7 puis au vecteur actif V1, V2, V3, V4, V5, V6 du secteur S1, S2, S3, S4, S5, S6 dans lequel il se trouve puis à l'autre vecteur de séquence zéro V7 ou V0 et ainsi de suite, ce qui permet d'alterner les tensions positives et nulles aux bornes des phases U, V, W de la machine électrique 30. Une telle alternance de tension aux bornes des phases U, V, W de la machine électrique 30 permet de faire varier l'amplitude RMS de tension au bornes des phases de la machine électriques, indépendamment de la valeur de la tension batterie, ce que ne permet pas une stratégie Full-Wave.

En fonctionnement du système 1, l'unité électronique de contrôle 210 commande les interrupteurs I1, I2, I3, I4, I5, I6 selon l'une ou l'autre des séquences VMFW1 ou VMFW2 de sorte que la tension aux bornes de chaque phase U, V, W de la machine électrique 30, mesurée par rapport au neutre, soit égale à la valeur (donnée dans la Table 1) définie par le vecteur de contrôle V0, V1, V2, V3, V4, V5, V6, V7 associé au sous-secteur dans lequel se trouve le vecteur de commande V*.

**EP 3 657 664 B1**

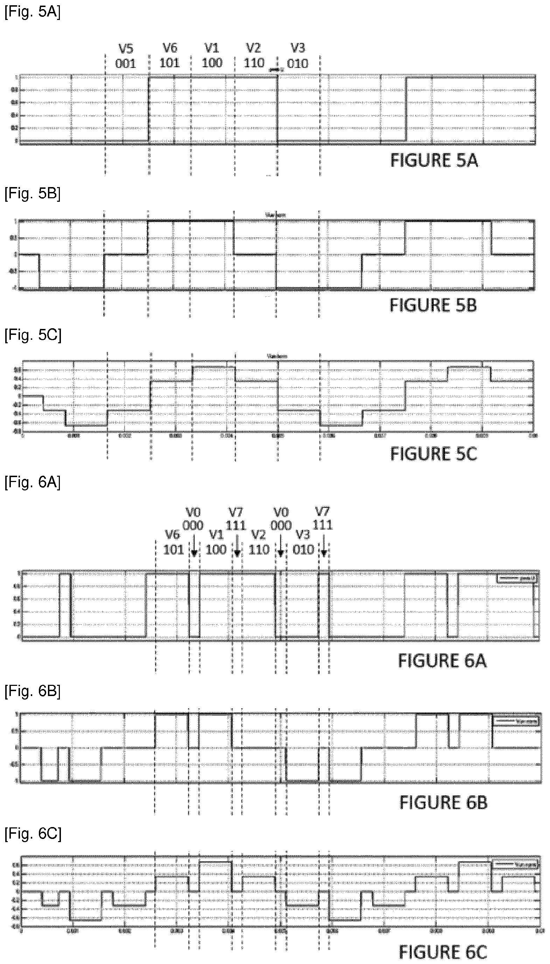

On a représenté aux figures 5A à 5C un exemple de commande de la phase U de la machine électrique pour laquelle les valeurs prises par le vecteur de commande V* correspondent aux valeurs successives des vecteurs actifs V1, V2, V3, V4, V5, V6, selon la stratégie Full-Wave. On constate que les valeurs du signal de tension normalisée aux bornes de la phase U correspondent successivement aux valeurs des vecteurs actifs V1, V2, V3, V4, V5, V6 (figure 5C) et permettent une alternance de 0 et de 1 aux niveaux de l'interrupteur bas I2 de la première branche de l'onduleur 20 au tiers de la fréquence dudit signal de tension normalisée aux bornes de la phase U.

On a représenté aux figures 6A à 6C un exemple de commande de la phase U de la machine électrique pour laquelle les valeurs prises par le vecteur de commande V* correspondent aux valeurs successives de la séquence VMFW1 ou VMFW2 définie selon l'invention. On constate que la fréquence de commutation des interrupteurs I1, I2, I3, I4, I5, I6 est trois fois plus importante qu'en stratégie Full-Wave. L'ordre de parcours des vecteurs actifs est le même qu'en stratégie Full-Wave mais est alterné avec l'un ou l'autre des vecteurs de séquence zéro V0, V7, ce qui a pour effet de pouvoir contrôler l'amplitude de la tension RMS appliquée aux bornes de chaque phase U, V, W de la machine électrique 30.

Bien qu'augmentant la fréquence de commutation et donc les pertes par commutation par rapport à la stratégie Full Wave, la stratégie selon l'invention permet de combiner les avantages de la stratégie à fréquence fixe et de la stratégie Full Wave à savoir une plage de vitesse du rotor étendue, une tension disponible aux bornes de chaque phase U, V, W de la machine électrique 30 variable et dont la valeur maximale est plus élevée comparé à une stratégie de commutation à fréquence fixe. Elle peut par exemple remplacer la stratégie à fréquence fixe et/ou la stratégie Full Wave ou tout simplement assurer une transition entre les deux stratégies.

**Revendications**

1. Procédé de commande d'une machine électrique (30) triphasée à partir d'un onduleur (20), ledit onduleur (20) recevant en entrée une tension continue et délivrant en sortie trois tensions de phase permettant de commander la machine électrique (30), l'onduleur (20) comprenant trois branches comprenant chacune un interrupteur haut (I1, I3, I5) et un interrupteur bas (I2, I4, I6), chaque interrupteur (I1, I2, I3, I4, I5, I6) étant apte à commuter dans une position ouverte ou une position fermée, la position d'un interrupteur haut d'une branche étant toujours l'inverse de la position de l'interrupteur bas de cette même branche, la position simultanée des interrupteurs des branches de l'onduleur étant matérialisée par un vecteur de contrôle (V0, V1, V2, V3, V4, V5, V6, V7) comportant trois éléments binaires, soit huit vecteurs représentant les différentes combinaisons des positions possibles des interrupteurs, le vecteur pour lequel tous les interrupteurs haut (I1, I3, I5) des branches sont en position ouverte étant un premier vecteur dit « de séquence zéro » (V0), le vecteur pour lequel tous les interrupteurs haut (I1, I3, I5) des branches sont en position fermée étant un deuxième vecteur dit « de séquence zéro » (V7), et les autres vecteurs étant dits « vecteurs actifs », lesdits vecteurs actifs (V1, V2, V3, V4, V5 et V6) délimitant six secteurs (S1, S2, S3, S4, S5, S6) de commande en représentation complexe où chaque secteur (S1, S2, S3, S4, S5, S6) comporte en son centre un vecteur actif (V1, V2, V3, V4, V5, V6), la commande de consigne de la machine électrique (30) étant représentée par un vecteur de commande (V*) se déplaçant de secteur en secteur avec la rotation du rotor de la machine électrique,

   le procédé étant **caractérisé en ce que**, chaque secteur (S1, S2, S3, S4, S5, S6) étant subdivisé en trois sous-secteurs dont un sous-secteur central centré sur le vecteur actif, un premier sous-secteur latéral associé au premier vecteur de séquence zéro (V0), et un deuxième sous-secteur latéral, opposé au premier sous-secteur latéral par rapport au sous-secteur central, associé au deuxième vecteur de séquence zéro (V7), il comprend une étape de commande de la tension aux bornes de chaque phase (U, V, W) de la machine électrique (30), mesurée par rapport au neutre, avec la valeur définie par le vecteur de contrôle (V0, V1, V2, V3, V4, V5, V6, V7) associé au sous-secteur dans lequel se trouve le vecteur de commande (V*).

2. Procédé selon la revendication 1, dans lequel le premier sous-secteur latéral précède le sous-secteur central et le deuxième sous-secteur latéral succède au sous-secteur central dans chaque secteur correspondant au premier, au troisième et au cinquième vecteur de contrôle.

3. Procédé selon la revendication 1, dans lequel le premier sous-secteur latéral précède le sous-secteur central et le deuxième sous-secteur latéral succède au sous-secteur central dans chaque secteur correspondant au deuxième, au quatrième et au sixième vecteur de contrôle.

4. Procédé selon l'une des revendications précédentes, dans lequel l'angle ($\theta_{VX}$) du secteur d'angle correspondant au sous-secteur central de chaque secteur (S1, S2, S3, S4, S5, S6) est compris entre 0 et $\dfrac{\pi}{3}$ radians.

5. Procédé selon l'une des revendications précédentes, dans lequel l'angle ($\theta_{VX}$) du secteur d'angle correspondant au sous-secteur central de chaque secteur (S1, S2, S3, S4, S5, S6) est défini en radians selon la formule :

$$\theta_{VX} = \frac{|\overrightarrow{V_{\alpha\beta\,norm}}|}{\sqrt{\dfrac{3}{2}} \times \dfrac{2}{\pi}} \times \frac{\pi}{3}$$

où $|\overrightarrow{V_{\alpha\beta\,norm}}|$ représente la norme du vecteur de commande (V*) normalisé.

6. Procédé selon l'une des revendications précédentes, ledit procédé étant une modulation en vecteur d'espace pleine onde.

7. Onduleur (20) de commande d'une machine électrique (30) triphasée, ledit onduleur (20) étant apte à convertir une tension continue en trois tensions de phase permettant de commander la machine électrique (30), l'onduleur (20) comprenant trois branches comprenant chacune un interrupteur haut (I1, I3, I5) et un interrupteur bas (I2, I4, I6), chaque interrupteur (I1, I2, I3, I4, I5, I6) étant apte à commuter dans une position ouverte ou une position fermée, la position d'un interrupteur haut (I1, I3, I5) d'une branche étant toujours l'inverse de la position de l'interrupteur bas (I2, I4, I6) de cette même branche, la position simultanée des interrupteurs (I1, I2, I3, I4, I5, I6) des branches de l'onduleur (20) étant matérialisée par un vecteur de contrôle (V0, V1, V2, V3, V4, V5, V6, V7) comportant trois éléments binaires, soit huit vecteurs représentant les différentes combinaisons des positions possibles des interrupteurs (I1, I2, I3, I4, I5, I6), le vecteur pour lequel tous les interrupteurs haut (I1, I3, I5) des branches sont en position ouverte étant un premier vecteur dit « de séquence zéro » (V0) et le vecteur pour lequel tous les interrupteurs haut (I2, I4, I6) des branches sont en position fermée étant un deuxième vecteur dit « de séquence zéro » (V7), et les autres vecteurs étant dits « vecteurs actifs », lesdits vecteurs actifs (V1, V2, V3, V4, V5 et V6) délimitant six secteurs (S1, S2, S3, S4, S5, S6) de commande en représentation complexe où chaque secteur (S1, S2, S3, S4, S5, S6) comporte en son centre un vecteur actif (V1, V2, V3, V4, V5, V6), la commande de consigne de la machine électrique (30) étant représentée par un vecteur de commande (V*) se déplaçant de secteur en secteur avec la rotation du rotor de la machine électrique (30), l'onduleur (20) étant **caractérisé en ce que**, chaque secteur (S1, S2, S3, S4, S5, S6) étant subdivisé en trois sous-secteurs dont un sous-secteur central centré sur le vecteur actif (V1, V2, V3, V4, V5 et V6), un premier sous-secteur latéral associé au premier vecteur de séquence zéro (V0), et un deuxième sous-secteur latéral, opposé au premier sous-secteur latéral par rapport au sous-secteur central, associé au deuxième vecteur de séquence zéro (V7), il est configuré pour appliquer une tension aux bornes de chaque phase (U, V, W) de la machine électrique (30), mesurée par rapport au neutre, égale à la valeur définie par le vecteur de contrôle (V0, V1, V2, V3, V4, V5, V6, V7) associé au sous-secteur dans lequel se trouve le vecteur de commande (V*).

8. Onduleur (20) selon la revendication 7, dans lequel le premier sous-secteur latéral précède le sous-secteur central et le deuxième sous-secteur latéral succède au sous-secteur central dans chaque secteur correspondant au premier, au troisième et au cinquième vecteur de contrôle.

9. Onduleur (20) selon la revendication 7, dans lequel le premier sous-secteur latéral précède le sous-secteur central et le deuxième sous-secteur latéral succède au sous-secteur central dans chaque secteur correspondant au deuxième, au quatrième et au sixième vecteur de contrôle.

10. Onduleur (20) selon l'une des revendications 7 à 9, dans lequel l'angle ($\theta_{VX}$) du secteur d'angle correspondant au sous-secteur central de chaque secteur est compris entre 0 et $\dfrac{\pi}{3}$ radians.

11. Onduleur (20) selon l'une des revendications 7 à 10, dans lequel l'angle ($\theta_{VX}$) du secteur d'angle correspondant au sous-secteur central de chaque secteur (S1, S2, S3, S4, S5, S6) est défini en radians selon la formule :

$$\theta_{VX} = \frac{\left|\overrightarrow{V_{\alpha\beta\,norm}}\right|}{\sqrt{\dfrac{3}{2}} \times \dfrac{2}{\pi}} \times \frac{\pi}{3}$$

où $|\overrightarrow{V_{\alpha\beta\,norm}}|$ représente la norme du vecteur de commande (V*) normalisé.

12. Système (1) de motorisation électrique pour véhicule automobile, ledit système (1) comprenant une machine électrique (30) triphasée et un onduleur (20), selon l'une des revendications 7 à 11, apte à générer des tensions de phase de ladite machine électrique (30) à partir d'une tension continu.

13. Système (1) selon la revendication 12, comprenant une batterie d'alimentation haute tension (10) connectée à l'onduleur (20) via une interface définissant une tension continue.

**Patentansprüche**

1. Verfahren zum Steuern einer dreiphasigen elektrischen Maschine (30) ab einem Wechselrichter (20), wobei der Wechselrichter (20) am Eingang eine Gleichspannung erhält und am Ausgang drei Phasenspannungen liefert, die erlauben, die elektrische Maschine (30) zu steuern, wobei der Wechselrichter (20) drei Abzweigungen umfasst, von denen jede einen Auf-Schalter (I1, I3, I5) und einen Ab-Schalter (I2, I4, I6) umfasst, wobei jeder Schalter (I1, I2, I3, I4, I5, I6) imstande ist, in eine offene Position oder eine geschlossene Position umzuschalten, wobei die Position eines Auf-Schalters einer Abzweigung immer umgekehrt zur Position des Ab-Schalters derselben Abzweigung ist, wobei die gleichzeitige Position der Schalter der Abzweigungen des Wechselrichters von einem Kontrollvektor (V0, V1, V2, V3, V4, V5, V6, V7) materialisiert ist, der drei binäre Elemente aufweist, also acht Vektoren, die die verschiedenen Kombinationen der möglichen Positionen der Schalter repräsentieren, wobei der Vektor, für den alle Auf-Schalter (I1, I3, I5) der Abzweigungen in offener Position sind, ein erster, als "Null-Sequenz" bezeichneter Vektor (V0) ist, der Vektor, für den alle Auf-Schalters (I1, I3, I5) der Abzweigungen in geschlossener Position sind, ein zweiter, als "Null-Sequenz" bezeichneter Vektor (V7) ist, und die anderen Vektoren "aktive Vektoren" sind, wobei die aktiven Vektoren (V1, V2, V3, V4, V5 und V6) sechs Steuersektoren (S1, S2, S3, S4, S5, S6) in komplexer Darstellung begrenzen, wobei jeder Sektor (S1, S2, S3, S4, S5, S6) in seinem Zentrum einen aktiven Vektor (V1, V2, V3, V4, V5, V6) aufweist, wobei die Sollwertsteuerung der elektrischen Maschine (30) von einem Steuervektor (V*) repräsentiert wird, der sich mit der Rotation des Rotors der elektrischen Maschine von Sektor zu Sektor verlagert, wobei das Verfahren **dadurch gekennzeichnet ist, dass**, wobei jeder Sektor (S1, S2, S3, S4, S5, S6) in drei Untersektoren unterteilt ist, von denen ein zentraler Untersektor auf den aktiven Vektor zentriert ist, ein erster seitlicher Untersektor dem ersten Vektor mit der Sequenz null (V0) zugeordnet ist und ein zweiter seitlicher Untersektor gegenüber dem erster seitlichen Untersektor in Bezug auf den zentralen Untersektor dem zweiten Vektor mit der Sequenz null (V7) zugeordnet ist, es einen Schritt des Steuerns der Spannung an den Klemmen jeder Phase (U, V, W) der elektrischen Maschine (30) umfasst, gemessen in Bezug auf den Nullleiter, mit dem von dem Kontrollvektor (V0, V1, V2, V3, V4, V5, V6, V7), der dem Untersektor zugeordnet ist, in dem sich der Steuervektor (V*) befindet, definierten Wert.

2. Verfahren nach Anspruch 1, wobei der erste seitliche Untersektor dem zentralen Untersektor vorangeht und der zweite seitliche Untersektor dem zentralen Untersektor in jedem Sektor folgt, der dem ersten, dem dritten und dem fünften Kontrollvektor entspricht.

3. Verfahren nach Anspruch 1, wobei der erste seitliche Untersektor dem zentralen Untersektor vorangeht und der zweite seitliche Untersektor dem zentralen Untersektor in jedem Sektor folgt, der dem zweiten, dem vierten und dem sechsten Kontrollvektor entspricht.

4. Verfahren nach einem der vorangehenden Ansprüche, wobei der Winkel ($\theta_{VX}$) des Winkelsektors, der dem zentralen Untersektor jedes Sektors (S1, S2, S3, S4, S5, S6) entspricht, zwischen 0 und $\dfrac{\pi}{3}$ Radiant liegt.

5. Verfahren nach einem der vorangehenden Ansprüche, wobei der Winkel ($\theta_{VX}$) des Winkelsektors, der dem zentralen Untersektor jedes Sektors (S1, S2, S3, S4, S5, S6) entspricht, definiert ist, in Radiant, gemäß der Formel:

$$\theta_{VX} = \frac{|\overline{V_{\alpha\beta\,norm}}|}{\sqrt{\frac{3}{2}} \times \frac{2}{\pi}} \times \frac{\pi}{3}$$

wobei $|\overline{V_{\alpha\beta\,norm}}|$ die Norm des standardisierten Steuervektors (V*) darstellt.

6. Verfahren nach einem der vorangehenden Ansprüche, wobei das Verfahren eine Vollwellen-Raumvektormodulation ist.

7. Wechselrichter (20) zum Steuern einer dreiphasigen elektrischen Maschine (30), wobei der Wechselrichter (20) imstande ist, eine Gleichspannung in drei Phasenspannungen umzuwandeln, die erlauben, die elektrische Maschine (30) zu steuern, wobei der Wechselrichter (20) drei Abzweigungen umfasst, von denen jede einen Auf-Schalter (I1, I3, I5) und einen Ab-Schalter (I2, I4, I6) umfasst, wobei jeder Schalter (I1, I2, I3, I4, I5, I6) imstande ist, in eine offene Position oder eine geschlossene Position umzuschalten, wobei die Position eines Auf-Schalters (I1, I3, I5) einer Abzweigung immer umgekehrt zur Position des Ab-Schalters (I2, I4, I6) derselben Abzweigung ist, wobei die gleichzeitige Position der Schalter (I1, I2, I3, I4, I5, I6) der Abzweigungen des Wechselrichters (20) von einem Kontrollvektor (V0, V1, V2, V3, V4, V5, V6, V7) materialisiert ist, der drei binäre Elemente aufweist, also acht Vektoren, die die verschiedenen Kombinationen der möglichen Positionen der Schalter (I1, I2, I3, I4, I5, I6) repräsentieren, wobei der Vektor, für den alle Auf-Schalter (I1, I3, I5) der Abzweigungen in offener Position sind, ein erster, als "Null-Sequenz" bezeichneter Vektor (V0) ist, und der Vektor, für den alle Auf-Schalters (I1, I3, I5) der Abzweigungen in geschlossener Position sind, ein zweiter, als "Null-Sequenz" bezeichneter Vektor (V7) ist, und die anderen Vektoren "aktive Vektoren" sind, wobei die aktiven Vektoren (V1, V2, V3, V4, V5 und V6) sechs Steuersektoren (S1, S2, S3, S4, S5, S6) in komplexer Darstellung begrenzen, wobei jeder Sektor (S1, S2, S3, S4, S5, S6) in seinem Zentrum einen aktiven Vektor (V1, V2, V3, V4, V5, V6) aufweist, wobei die Sollwertsteuerung der elektrischen Maschine (30) von einem Steuervektor (V*) repräsentiert wird, der sich mit der Rotation des Rotors der elektrischen Maschine (30) von Sektor zu Sektor verlagert, wobei der Wechselrichter (20) **dadurch gekennzeichnet ist, dass**, wobei jeder Sektor (S1, S2, S3, S4, S5, S6) in drei Untersektoren unterteilt ist, von denen ein zentraler Untersektor auf den aktiven Vektor (V1, V2, V3, V4, V5 und V6) zentriert ist, ein erster seitlicher Untersektor dem ersten Vektor mit der Sequenz null (V0) zugeordnet ist und ein zweiter seitlicher Untersektor gegenüber dem erster seitlichen Untersektor in Bezug auf den zentralen Untersektor dem zweiten Vektor mit der Sequenz null (V7) zugeordnet ist, er ausgelegt ist, um eine Spannung an die Klemmen jeder Phase (U, V, W) der elektrischen Maschine (30) anzulegen, die, gemessen in Bezug auf den Nullleiter, gleich dem von dem Kontrollvektor (V0, V1, V2, V3, V4, V5, V6, V7), der dem Untersektor zugeordnet ist, in dem sich der Steuervektor (V*) befindet, definierten Wert ist.

8. Wechselrichter (20) nach Anspruch 7, wobei der erste seitliche Untersektor dem zentralen Untersektor vorangeht und der zweite seitliche Untersektor dem zentralen Untersektor in jedem Sektor folgt, der dem ersten, dem dritten und dem fünften Kontrollvektor entspricht.

9. Wechselrichter (20) nach Anspruch 7, wobei der erste seitliche Untersektor dem zentralen Untersektor vorangeht und der zweite seitliche Untersektor dem zentralen Untersektor in jedem Sektor folgt, der dem zweiten, dem vierten und dem sechsten Kontrollvektor entspricht.

10. Wechselrichter (20) nach einem der Ansprüche 7 bis 9, wobei der Winkel ($\theta_{VX}$) des Winkelsektors, der dem zentralen Untersektor jedes Sektors entspricht, zwischen 0 und $\frac{\pi}{3}$ Radiant liegt.

11. Wechselrichter (20) nach einem der Ansprüche 7 bis 10, wobei der Winkel ($\theta_{VX}$) des Winkelsektors, der dem zentralen Untersektor jedes Sektors (S1, S2, S3, S4, S5, S6) entspricht, definiert ist, in Radiant, gemäß der Formel:

$$\theta_{VX} = \frac{|\overline{V_{\alpha\beta\,norm}}|}{\sqrt{\frac{3}{2}} \times \frac{2}{\pi}} \times \frac{\pi}{3}$$

wobei $|\overline{V_{\alpha\beta\,norm}}|$ die Norm des standardisierten Steuervektors (V*) darstellt.

**12.** System (1) zur elektrischen Motorisierung für ein Kraftfahrzeug, wobei das System (1) eine dreiphasige elektrische Maschine (30) und einen Wechselrichter (20) nach einem der Ansprüche 7 bis 11 umfasst, der imstande ist, Phasenspannungen der elektrischen Maschine (30) ab einer Gleichspannung zu erzeugen.

**13.** System (1) nach Anspruch 12, umfassend eine Hochspannungs-Versorgungsbatterie (10), die mit dem Wechselrichter (20) über eine Schnittstelle verbunden ist, die eine Gleichspannung definiert.

**Claims**

**1.** Method for controlling a three-phase electrical machine (30) from an inverter (20), where said inverter (20) receives a direct voltage at its input, and delivers at its output three phase voltages enabling the electrical machine (30) to be controlled, where the inverter (20) comprises three branches each comprising an upper switch (I1, I3, I5) and a lower switch (I2, I4, I6), where each switch (I1, I2, I3, I4, I5, I6) can switch to an open or closed position, where the position of an upper switch of a branch is always the reverse of the position of the lower switch of this same branch, where the simultaneous positions of the switches of the branches of the inverter are represented by a control vector (V0, V1, V2, V3, V4, V5, V6, V7) comprising three binary elements, i.e. eight vectors representing the various combinations of the possible positions of the switches, where the vector for which all the upper switches (I1, I3, I5) of the branches are in an open position is a first "zero-sequence" vector (V0), and where the vector for which all the upper switches (I1, I3, I5) of the branches are in a closed position is a second "zero-sequence" vector (V7), and the other vectors are called "active vectors", where said active vectors (V1, V2, V3, V4, V5 and V6) delimit six control sectors (S1, S2, S3, S4, S5, S6) as a complex representation, in which at the centre of each sector (S1, S2, S3, S4, S5, S6) there is an active vector (V1, V2, V3, V4, V5, V6), where the setpoint control of the electrical machine (30) is represented by a control vector (V*) moving from sector to sector with the rotation of the electrical machine's rotor,
where the method is **characterised by** the fact that, with each sector (S1, S2, S3, S4, S5, S6) subdivided into three subsectors, comprising a central subsector centred on the active vector, a first lateral subsector associated with the first zero-sequence vector (V0), and a second lateral subsector, opposite the first lateral subsector relative to the central subsector, associated with the second zero-sequence vector (V7), it comprises a step of control of the voltage at the terminals of each phase (U, V, W) of the electrical machine (30), measured relative to neutral, with the value defined by the control vector (V0, V1, V2, V3, V4, V5, V6, V7) associated with the subsector in which the control vector (V*) is located.

**2.** Method according to claim 1, in which the first lateral subsector precedes the central subsector, and the second lateral subsector succeeds the central subsector in each sector corresponding to the first, third and fifth control vectors.

**3.** Method according to claim 1, in which the first lateral subsector precedes the central subsector, and the second lateral subsector succeeds the central subsector in each sector corresponding to the second, fourth and sixth control vectors.

**4.** Method according to one of the previous claims, in which the angle ($\theta_{VX}$) of the angle sector corresponding to the central subsector of each sector (S1, S2, S3, S4, S5, S6) is between 0 and $\dfrac{\pi}{3}$ radians.

**5.** Method according to one of the previous claims, in which the angle ($\theta_{VX}$) of the angle sector corresponding to the central subsector of each sector (S1, S2, S3, S4, S5, S6) is defined in radians using the following formula:

$$\theta_{VX} = \frac{\left|\overline{V_{\alpha\beta\,norm}}\right|}{\sqrt{\dfrac{3}{2}} \times \dfrac{2}{\pi}} \times \frac{\pi}{3}$$

where $|\overline{V_{\alpha\beta\,norm}}|$ represents the norm of the normalised control vector (V*).

6. Method according to one of the previous claims, where said method is a full-wave space vector modulation.

7. Inverter (20) for controlling a three-phase electrical machine (30), where said inverter (20) is able to convert a direct voltage into three phase voltages enabling the electrical machine (30) to be controlled, where the inverter (20) comprises three branches each comprising an upper switch (I1, I3, I5) and a lower switch (I2, I4, I6), where each switch (I1, I2, I3, I4, I5, I6) can switch to an open or closed position, where the position of an upper switch (I1, I3, I5) of a branch is always the reverse of the position of the lower switch (I2, I4, I6) of this same branch, where the simultaneous positions of the switches (I1, I2, I3, I4, I5, I6) of the branches of the inverter (20) are represented by a control vector (V0, V1, V2, V3, V4, V5, V6, V7) comprising three binary elements, i.e. eight vectors representing the various combinations of the possible positions of the switches (I1, I2, I3, I4, I5, I6), where the vector for which all the upper switches (I1, I3, I5) of the branches are in an open position is a first "zero-sequence" vector (V0), and where the vector for which all the upper switches (I2, I4, I6) of the branches are in a closed position is a second "zero-sequence" vector (V7), and the other vectors are called "active vectors", where said active vectors (V1, V2, V3, V4, V5 and V6) delimit six control sectors (S1, S2, S3, S4, S5, S6) as a complex representation, in which at the centre of each sector (S1, S2, S3, S4, S5, S6) there is an active vector (V1, V2, V3, V4, V5, V6), where the setpoint control of the electrical machine (30) is represented by a control vector (V*) moving from sector to sector with the rotation of the electrical rotor of the electrical machine (30), where the inverter (20) is **characterised by** the fact that, with each sector (S1, S2, S3, S4, S5, S6) subdivided into three subsectors, comprising a central subsector centred on the active vector (V1, V2, V3, V4, V5 and V6), a first lateral subsector associated with the first zero-sequence vector (V0), and a second lateral subsector, opposite the first lateral subsector relative to the central subsector, associated with the second zero-sequence vector (V7), it is configured to apply a voltage at the terminals of each phase (U, V, W) of the electrical machine (30), measured relative to neutral, equal to the value defined by the control vector (V0, V1, V2, V3, V4, V5 and V6, V7) associated with the subsector in which the control vector (V*) is located.

8. Inverter (20) according to claim 7, in which the first lateral subsector precedes the central subsector, and the second lateral subsector succeeds the central subsector in each sector corresponding to the first, third and fifth control vectors.

9. Inverter (20) according to claim 7, in which the first lateral subsector precedes the central subsector, and the second lateral subsector succeeds the central subsector in each sector corresponding to the second, fourth and sixth control vectors.

10. Inverter (20) according to one of claims 7 to 9, in which the angle ($\theta_{VX}$) of the angle sector corresponding to the central subsector of each sector is between 0 and $\dfrac{\pi}{3}$ radians.

11. Inverter (20) according to one of claims 7 to 10, in which the angle ($\theta_{VX}$) of the angle sector corresponding to the central subsector of each sector (S1, S2, S3, S4, S5, S6) is defined in radians using the following formula:

$$\theta_{VX} = \frac{\left|\overrightarrow{V_{\alpha\beta\,norm}}\right|}{\sqrt{\frac{3}{2}} \times \frac{2}{\pi}} \times \frac{\pi}{3}$$

where $|\overline{V_{\alpha\beta\,norm}}|$ represents the norm of the normalised control vector (V*).

12. Electric drivetrain (1) for a motor vehicle, where said drivetrain (1) comprises a three-phase electrical machine (30) and an inverter (20), according to one of claims 7 to 11, able to generate phase voltages of said electrical machine (30) from a direct voltage.

13. Drivetrain (1) according to claim 12, comprising a high-voltage power battery (10) connected to the inverter (20) via an interface defining a direct voltage.

FIGURE 1

FIGURE 2

FIGURE 3

FIGURE 4

[Fig. 5A]

FIGURE 5A

[Fig. 5B]

FIGURE 5B

[Fig. 5C]

FIGURE 5C

[Fig. 6A]

FIGURE 6A

[Fig. 6B]

FIGURE 6B

[Fig. 6C]

FIGURE 6C

**RÉFÉRENCES CITÉES DANS LA DESCRIPTION**

**Littérature non-brevet citée dans la description**

- **DAVOOD YAZDANI et al.** *Multifunctional Grid-Connected Multimodule Power Converters Capable of Operating in Single-Pulse and PWM Switching Modes*